# EUROPÄISCHE PATENTSCHRIFT

(11) **EP 3 949 089 B1**
(45) Veröffentlichungstag und Bekanntmachung des Hinweises auf die Patenterteilung: **13.07.2022**
(21) Anmeldenummer: 20724240.5
(22) Anmeldetag: 24.03.2020
(51) Int. Cl.: H02K 7/06, H02K 7/18

(54) **ANLAGE ZUM ERZEUGEN ELEKTRISCHER ENERGIE**
SYSTEM FOR GENERATING ELECTRICAL ENERGY
SYSTÈME DE GÉNÉRATION D'ÉNERGIE ÉLECTRIQUE

(30) Priorität: 27.03.2019 IT 201900004563
(43) Veröffentlichungstag der Anmeldung: 09.02.2022
(73) Patentinhaber: WA.ST SRLS, 39021 Laces (BZ) (IT)
(72) Erfinder: GAMPER, Karl, 39021 LACES (BZ) (IT)
(86) Internationale Anmeldenummer: PCT/IT2020/050073
(87) Internationale Veröffentlichungsnummer: WO 2020/194362

(56) Entgegenhaltungen:
- DE-A1-102013 210 650
- GB-A- 2 391 299
- US-A- 4 698 973
- US-A1- 2019 003 448
- US-B2- 8 169 091

## Beschreibung

### Technisches Gebiet

Die Erfindung betrifft eine Anlage zum Erzeugen elektrischer Energie, bei der man einen an seinem einem Ende eingespannten Stab zum Schwingen bringt und die Schwingungsbewegung ausnutzt, um elektrische Energie zu erzeugen.

Der an seinem einem Ende eingespannte Stab bildet ein Schwingungsfähiges System, das, wenn es einer periodischen Beanspruchung ausgesetzt ist, mit einer Schwingungsfrequenz und einer Schwingungsweite schwingt, die sowohl von der Frequenz der periodischen Beanspruchung als auch von den physischen und geometrischen Eigenschaften des Stabes abhängen.

Jedes schwingungsfähige System weist ferner, wie es bekannt ist, eine eigene sogenannte Eigenfrequenz auf, die von wesentlicher Bedeutung ist, falls das schwingungsfähige System mit einer periodischen Beanspruchung belastet wird, die eine Frequenz aufweist, die genau mit der Eigenfrequenz des belasteten Systems übereinstimmt. In einem solchen Fall findet das Phänomen der Resonanz statt, die, wie es bekannt ist, eine deutliche Zunahme der Schwingungsweite verursacht, was einer beträchtlichen Energiespeicherung innerhalb des belasteten Systems entspricht. Wenn die Energiespeicherung zu groß wird, kann die Resonanz zu einem physischen Zusammenbruch des belasteten Systems führen, sodass man, um die körperliche Unversehrtheit des belasteten Systems zu bewahren, in der Regel verhindert, dass die Resonanz stattfindet, d.h. man vermeidet die Frequenzwerte die dem Wert der Eigenfrequenz nahe liegen.

Ausgehend aus diesem Zusammenhang besteht die Aufgabe der Erfindung darin eine Anlage zum Erzeugen elektrischer Energie zur Verfügung zu stellen, die in der Lage ist das Phänomen der Resonanz auszunutzen, um elektrische Energie zu erzeugen.

### Stand der Technik

Das Dokument US 2019/0003448 A1 zeigt ein System zum Erzeugen elektrischer Energie, bei dem man die Schwingungsbewegungen der Meereswellen ausnutzt, um eine mechanische Bewegung zu erzeugen, die an einen Wechselstromgenerator übertragen werden kann.

In dem Dokument GB 2391299 A wird erläutert, wie man durch Verwendung von heißem Wasser einen Kolben bewegen kann und wie man die Kolbenbewegung verwenden kann, um mittels eines Lineargenerators elektrische Energie zu erzeugen.

### Darstellung der Erfindung

Erfindungsgemäß wird diese Aufgabe gelöst, wenn eine Anlage zum Erzeugen elektrischer Energie die in dem Patentanspruch 1 angegebenen Merkmale aufweist.

Die erfindungsgemäße Anlage ermöglicht nämlich, mit einem minimalen Energieverbrauch, die Erzeugung einer periodischen Beanspruchung, mit der ein an seinem einem Ende eingespannter Stab belastet wird, damit dieser Stab schwingt. Die Frequenz der periodischen Beanspruchung mit der der an einem Ende eingespannte Stab belastet wird und die Eigenfrequenz des eingespannten Stabes sind gleich, weil das Ziel der Anbringung der periodischen Beanspruchung genau darin besteht, den an einem Ende eingespannten Stab in der Situation zu bringen in der das Phänomen der Resonanz erscheint. Im Gegensatz zu dem was üblicherweise in der Bautechnik geschieht, ist im Fall der Erfindung nämlich erwünscht, dass die Resonanz erscheint, weil die Anlage die Kontrolle über das Phänomen ermöglicht, indem die Schwingungsweite beschränkt wird, und die Abnahme von Bewegungsenergie ermöglicht, die infolge der von der Resonanz verursachten Zunahme der Schwingungsweite in dem Stab gespeichert wird, Um den an seinem einem Ende eingespannten Stab zum Schwingen zu bringen, wird er mit einer der Eigenfrequenz gleichen Frequenz angestoßen, indem zum Beispiel zumindest ein Arbeitszylinder verwendet wird, dessen Schaft periodisch von dem auf ihn ausgeübten Schub eines unter Druck stehenden Fluids angetrieben wird. Das unter Druck stehende Fluid wird seinerseits, mittels zweckmäßiger Kontrolle über ein Paar von Elektroventilen, periodisch dem Arbeitszylinder zugeleitet und zwar genau mit einer Frequenz, die der Eigenfrequenz gleich ist, sodass der Stab vom Schaft des zumindest einen Arbeitszylinders pro Sekunde eine Anzahl von Malen angestoßen wird die dem Wert der Eigenfrequenz des Stabes gleich ist. Um die Schwingungsbewegung des Stabes auszunutzen und elektrische Energie zu erzeugen sind Umwandlungs- und Übertragungsmittel und Antriebsmittel vorgesehen. Die Umwandlungs- und Übertragungsmittel wandeln die Schwingungsbewegung des Stabes in eine Hin- und Hertranslationsbewegung um und übertragen danach diese Hin- und Hertranslationsbewegung an die Antriebsmittel weiter, die dadurch eine zyklische Antriebsbewegung ausführen. Die Antriebsmittel treiben mit ihrer zyklischen Antriebsbewegung eine Vorrichtung zum Erzeugen elektrischer Energie an, mit der sie verbunden sind, damit diese die elektrische Energie erzeugt. Es sind zwei verschiedene technische Lösungen vorgesehen, abhängig davon ob die Vorrichtung zum Erzeugen elektrischer Energie ein Wechselstromgenerator (man siehe Anspruch 10) oder ein Lineargenerator (man siehe Anspruch 11) ist.

Der Arbeitszylinder ist derart angeordnet, dass (man siehe Anspruch 2) die Stelle, an der der Stab vom Schaft des Arbeitszylinders angestoßen wird, sich dem eingespannten Stabende so nahe wie möglich befindet. Dies bewirkt, dass der Hub des Schaftes bei seinem Ausfahren minimal ist und daher auch der notwendige Energieverbrauch, um den Schaft auszufahren, minimal ist.

Damit die Anlage optimal ist, können zusätzlich eine Messvorrichtung der Schwingungsweite und der Frequenz der Schwingungen des an einem Ende eingespannten Stabes (man siehe Anspruch 5), sodass man das Phänomen der Resonanz im Laufe der Zeit überwachen, kontrollieren und beibehalten kann, und eine den Druck des unter Druck stehenden Fluids erhöhende Druckerhöhungsvorrichtung (man siehe Anspruch 6) vorgesehen sein. Mittels der Druckerhöhungsvorrichtung ist es möglich den Druckwert in dem Anlageteil, das stromab der den Druck des unter Druck stehenden Fluids erhöhenden Druckerhöhungsvorrichtung angeordnet ist, gegenüber dem stromauf derselben angeordneten Anlageteil je nach bedarf zu ändern. Dank dieser Vorrichtung kann man z.B. den stromauf der Vorrichtung angeordneten Anlageteil unter Berücksichtigung eines Druckwertes entwerfen, der kleiner des in dem stromab der Vorrichtung vorhandenen Druckwertes ist, was eine Kostenersparnis ergibt.

Das unter Druck stehende Fluid ist bevorzugt fließendes Wasser aus einer gewöhnlichen Zulaufleitung der Wasserleitung. Es handelt sich um unter Druck stehendes Wasser, das überall in großen Mengen zur Verfügung steht. In einem solchen Fall ist der Arbeitszylinder ein hydraulischer Arbeitszylinder (man siehe die Ansprüche 3 und 4).

Wenn man ein weiteres Anschlussstück, ein Paar Sperrelektroventile, einen weiteren Arbeitszylinder und eine weitere Anschlussleitung hinzufügt (man siehe Anspruch 7), erhält man eine Anlage, die es ermöglicht die Situation, in der die Resonanz in dem Stab erscheint, schneller zu erreichen. Dieser weitere Arbeitszylinder ist nämlich vom eingespannten Stabende entfernter angeordnet als der zumindest eine Arbeitszylinder (man siehe Anspruch 8), sodass der Schaft dieses weiteren Arbeitszylinders an einer Stelle gegen den Stab stößt, bei der der Stab mit einer Schwingungsweite schwingt die größer als jene ist, die in der Nähe des eingespannten Stabendes möglich ist und das erleichtert die Erlangung des gewünschten Schwingungszustandes.

Schließlich, man siehe Anspruch 9, wenn man zusätzlich einen abgedichteten Behälter, der geeignet ist einem im Vergleich zum Luftdruck höheren Druck zu widerstehen und an die Zulaufleitung angeschlossen ist, ein an die Ablaufleitung angeschlossenes Gefäß und ein an den Wechselstromgenerator bzw. Lineargenerator angeschlossenes elektrisches Kabel, vorsieht und wenn alle Bestandteile der Anlage, mit Ausnahme der Zulaufleitung, der Ablaufleitung, des Gefäßes und des elektrischen Kabels vollständig innerhalb des Behälters angeordnet sind, dann kann die Anlage in dem Wasser eines Sees oder des Meers eingetaucht werden, sodass das unter Druck stehende Wasser, durch welches der Schaft des zumindest einen Arbeitszylinders angetrieben wird bzw. die Schafte des zumindest einen Arbeitszylinders und des weiteren Arbeitszylinder angetrieben werden, das Wasser des Sees oder des Meers ist.

### Kurze Beschreibung der Zeichnungen

Weitere Vorteile und Merkmale der Erfindung gehen aus der folgenden Beschreibung von Ausführungsbeispielen der erfindungsgemäßen Anlage zum Erzeugen elektrischer Energie hervor, die anhand der beigelegten Zeichnungen rein beispielhaft aber nicht in einschränkender Weise erläutert werden.

In den Figuren zeigen schematisch:

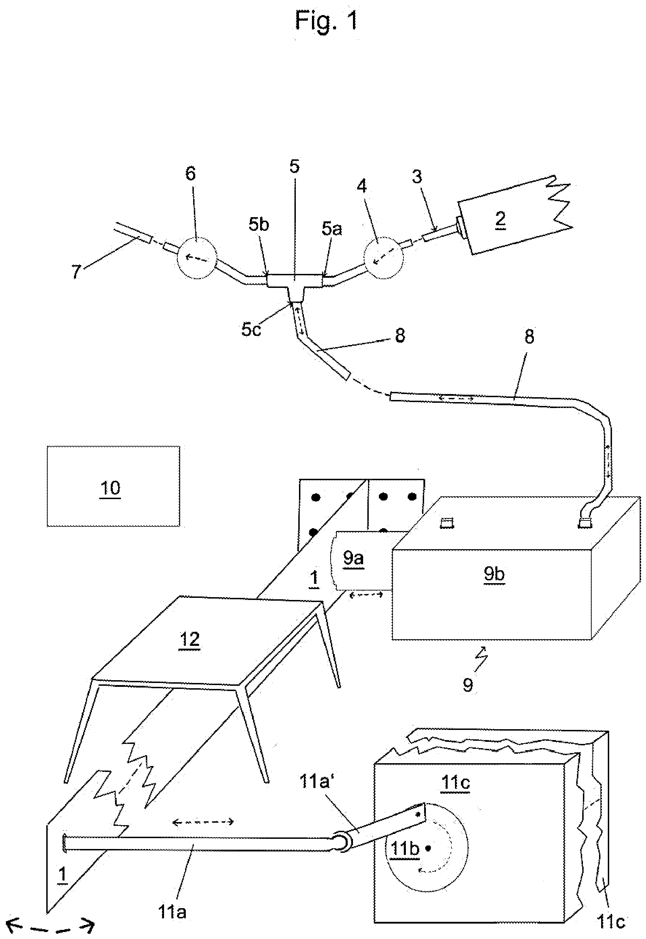

die Fig. **1-4** eine dreidimensionale Gesamtdarstellung von jeweils vier Ausführungsbeispielen einer ersten Ausführungsform der erfindungsgemäßen Anlage, bei der die Vorrichtung zum Erzeugen elektrischer Energie aus einem Wechselstromgenerator besteht, wobei aber die einzelnen Bestandteile der Anlage nicht alle mit dem gleichen Maßstab dargestellt sind, um das Verständnis zu erleichtern;

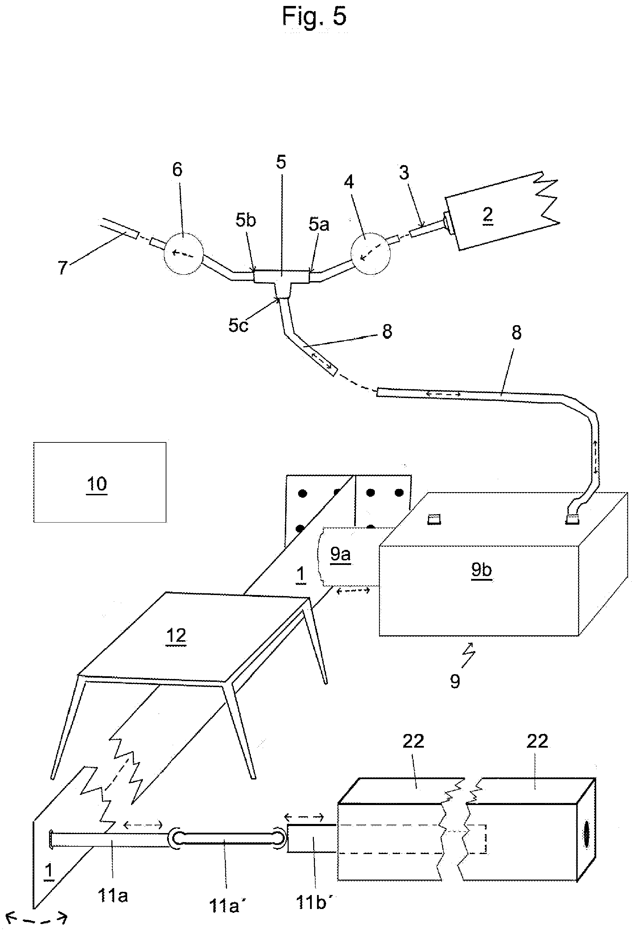

die Fig. **5-8** eine dreidimensionale Gesamtdarstellung von jeweils vier Ausführungsbeispielen einer zweiten Ausführungsform der erfindungsgemäßen Anlage, bei der die Vorrichtung zum Erzeugen elektrischer Energie aus einem Lineargenerator besteht, wobei aber die einzelnen Bestandteile der Anlage nicht alle mit dem gleichen Maßstab dargestellt sind, um das Verständnis zu erleichtern;

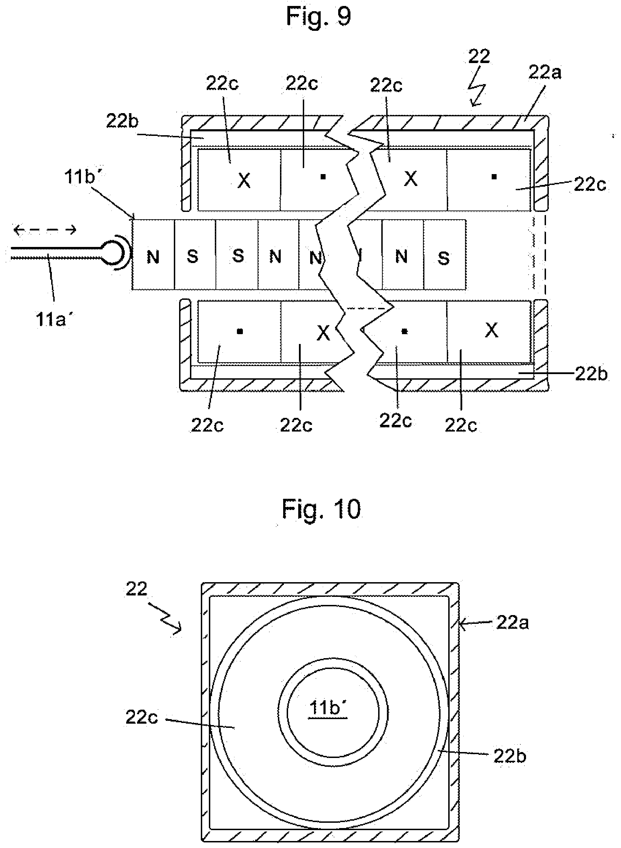

die Fig. **9** und **10** einen Längsschnitt und einen Querschnitt des in den Fig. 5-8 dargestellten Lineargenerators.

### Bester Weg zur Ausführung der Erfindung

In den Figuren ist eine Anlage zum Erzeugen elektrischer Energie dargestellt, bei der man einen an seinem einem Ende eingespannten Stab 1 zum Schwingen bringt und die Schwingungsbewegung ausnutzt, um elektrische Energie zu erzeugen. Ein solcher eingespannter Stab 1 bildet ein schwingungsfähiges System und weist eine eigene sogenannte Eigenfrequenz auf, die in bekannter Weise anhand der physischen und geometrischen Eigenschaften des Stabes 1 berechenbar ist.

Wie z.B. aus Fig 1 hervorgeht, umfasst die Anlage: eine Quelle 2 eines unter Druck stehenden Fluids, eine Zulaufleitung 3 des unter Druck stehenden Fluids, die 3 an die Quelle 2 des unter Druck stehenden Fluids angeschlossen ist, und ein Eintrittselektroventil 4, dessen Eintrittsöffnung an die Zulaufleitung 3 angeschlossen ist.

Die Anlage umfasst ferner ein Dreiwegeanschlussstück 5, ein Ablaufelektroventil 6 und eine Ablaufleitung 7.

Das Dreiwegeanschlussstück 5 weist eine Eintrittsöffnung 5a, eine Ablauföffnung 5b und eine Anschlussöffnung 5c auf. Im Einklang mit z.B. Fig 1 ist die Eintrittsöffnung 5a des Dreiwegeanschlussstückes 5 mittels einer ersten Zwischenleitung an die Ablauföffnung des Eintrittselektroventils 4 angeschlossen, während die Ablauföffnung 5b des Dreiwegeanschlussstückes 5 mittels einer zweiten Zwischenleitung an die Eintrittsöffnung des Ablaufelektroventils 6 angeschlossen ist. Die Ablauföffnung des Ablaufelektroventils 6 ist an die Ablaufleitung 7 angeschlossen.

Zur Anlage gehören auch eine Anschlussleitung 8 und zumindest ein Arbeitszylinder 9. Die Anschlussleitung 8 ist an die Anschlussöffnung 5c des Dreiwegeanschlussstückes 5 und an den Arbeitszylinder 9 angeschlossen. Das aus der Quelle 2 fließende Fluid kann mittels der Anschlussleitung 8 in das Gehäuse 9b des Arbeitszylinders 9 geleitet werden, wobei dadurch der Schaft 9b des Arbeitszylinders 9 angetrieben und aus dem Gehäuse 9b des Arbeitszylinders 9 ausgefahren wird. Bei seinem Ausfahren aus dem Gehäuse 9b des Arbeitszylinders 9 stoßt der Schaft 9a gegen den Stab 1. Wie man später erklären wird, damit der Stab 1 dem Phänomen der Resonanz ausgesetzt ist, finden diese Stöße gegen den Stab 1 mit einer Frequenz statt, die der Eigenfrequenz des Stabes 1 gleich ist.

Wie man in den Figuren dargestellt hat, ist der Arbeitszylinder 9 derart angeordnet, dass die Stelle, an der der Stab 1 vom Schaft 9a angestoßen wird, sich dem eingespannten Ende des Stabes 1 so nahe wie möglich befindet, d.h. in seiner unmittelbaren Nähe. Im Allgemeinen könnte der Schaft 9a an beliebiger Stelle gegen den Stab 1 stoßen, aber je mehr diese Stelle dem eingespannten Ende des Stabes 1 nahe liegt desto kleiner ist die Energiemenge, die benötigt wird damit der Schaft 9a gegen den Stab 1 anstößt, weil um so mehr diese Stelle dem eingespannten Ende des Stabes 1 nahe ist um so kleiner ist der Hub den der Schaft 9a ausführen muss, um gegen den Stab 1 zu stoßen. Dies ist dadurch begründet, dass wenn man sich vom eingespannten Ende des Stabes 1 entfernt, die Schwingungsweite der von den Punkten des Stabes 1 ausgeführten Schwingungen immer größer wird, da dieser Wert zwischen dem Null Wert des eingespannten Ende des Stabes 1 und dem maximalen Wert des freien Ende des Stabes 1 veränderlich ist.

Die Anlage umfass auch eine Steuerschalttafel 10, mittels welcher alle Bestandteile der Anlage und ihre Arbeitsstellungen betrieben werden.

Es scheint natürlich zu denken, dass das unter Druck stehende Fluid Druckluft ist und dass der Arbeitszylinder 9 ein pneumatischer Arbeitszylinder ist. Diese Lösung ist sicherlich für viele Situationen geeignet, da aber die Druckluft nicht leicht in großen Mengen zur Verfügung steht, wird bevorzugt, dass der Arbeitszylinder 9 ein hydraulischer Arbeitszylinder ist und dass das unter Druck stehende Fluid eine Flüssigkeit, insbesondere unter Druck stehendes Wasser, ist, wie z.B. das Wasser aus einer beliebigen bereits existierenden Zulaufleitung fließendes Wassers einer Wasserleitung, eines Industriewerks oder einer Wohnung, die in einem solchen Fall als Quelle 2 tätig wäre..

Während des Betriebes der Anlage werden das Eintrittselektroventil 4 und das Ablaufelektroventil 6 mit einer der Eigenfrequenz des Stabes 1 gleichen Frequenz von ihrer einen ersten Arbeitsstellung, in der das Eintrittselektroventil 4 offen und gleichzeitig das Ablaufelektroventil 6 hingegen geschlossen ist, in ihre eine zweite Arbeitsstellung, in der das Eintrittselektroventil 4 geschlossen und gleichzeitig das Ablaufelektroventil 6 hingegen offen ist, und umgekehrt, von ihrer besagten zweiten Arbeitsstellung In ihre besagte erste Arbeitsstellung, fortlaufend umgeschaltet.

In der oben beschriebenen ersten Arbeitsstellung kann das unter Druck stehende und aus der Quelle 2 fließende Fluid zum Arbeitszylinder 9 fließen und den Schaft 9a desselben 9 antreiben, damit dieser aus dem Gehäuse 9b des Arbeitszylinders 9 ausgefahren wird. Dies bewirkt den Stoß des Schaftes 9a gegen den Stab 1. In der oben beschriebenen zweiten Arbeitsstellung befindet sich hingegen der Arbeitszylinder 9 in unmittelbarer Verbindung mit der Ablaufleitung 7, sodass es zu einem Fall des Druckwertes des unter Druck stehenden Fluids kommt, wobei der Druckwert bis zu dem Luftdruck sinkt. Dadurch fließt gleichzeitig eine minimale dem Druckfall entsprechende Fluidmenge in die Ablaufleitung 7. Als Folge stößt der Schaft 9a nicht mehr gegen den Stab 1.

Das ständige Wechsel zwischen den beiden oben genannten Situationen, d.h. der Übergang von der ersten Situation in die zweite, dann von der zweiten in die erste und dann wieder von der ersten in die zweite und so weiter, bewirkt dass durch den Schaft 9a dem Stab 1 Stöße mit periodischem Takt versetzt werden.

Unter der Annahme daher das n die Eigenfrequenz des an seinem einem Ende eingespannten Stabes 1 ist, wenn, wie man erfindungsgemäß vorgesehen hat, das Eintrittselektroventil 4 und das Ablaufelektroventil 6 genau mit einer der Eigenfrequenz n des Stabes 1 gleichen Frequenz fortlaufend umgeschaltet werden, befinden sich das Eintrittselektroventil 4 und das Ablaufelektroventil 6 n-Male pro Sekunde in besagter ersten Arbeitsstellung, in der durch den Schaft 9a dem Stab 1 einen Stoß versetzt wird. Als Folge ist der Stab 1 der n-Male pro Sekunde vom Schaft 9a angestoßen wird, einer Beanspruchung ausgesetzt, die die Resonanz verursacht und die Schwingungsweite neigt dazu größer zu werden.

Die Anlage umfass ferner Umwandlungs- und Übertragungsmittel 11a, 11a' und Antriebsmittel 11b; 11b'.

Die Umwandlungs- und Übertragungsmittel 11a, 11a' wandeln die vom Stab 1 ausgeführte Schwingungsbewegung in eine Hin- und Hertranslationsbewegung um und übertragen danach diese Hin- und Hertranslationsbewegung an die Antriebsmittel 11b; 11b' weiter. Wie man in den Figuren sehen kann, bestehen die Umwandlungs- und Übertragungsmittel aus einer ersten Stange 11a, die an ihrem einen ersten Ende mit dem Stab 1 verbunden ist, und einer zweiten Stange 11a', die mit ihrem einen ersten Ende gelenkig, insbesondere durch ein Kugelgelenk, mit dem zweiten Ende der ersten Stange 11a verbunden ist. Das Kugelgelenk das die zwei Stangen 11a, 11a' verbindet, dient dazu die Tatsache zu berücksichtigen, dass das freie Ende des Stabes 1 infolge der Schwingungen auch Verschiebungen parallel zur Längsachse des Stabes 1 ausführt.

Die Antriebsmittel 11b; 11b' sind, insbesondere gelenkig, mit dem zweiten Ende der zweiten Stange 11a' verbunden, um von dieser 11a' besagte Hin- und Hertranslationsbewegung zu erhalten und dadurch eine zyklische Antriebsbewegung auszuführen. Im Fall der Antriebsmittel 11b, man siehe die Fig. 1-4, kann eine Scharnierverbindung genügen, während im Fall der Antriebsmittel 11b' wird eine durch ein Kugelgelenk hergestellte Verbindung bevorzugt, man siehe die Fig. 5-9. Auf diese Weise wird gewährleistet, dass die oben genannten Verschiebungen, die das freie Ende des Stabes 1 parallel zu dessen Längsachse ausführt, optimal ausgeglichen werden. Zur Anlage gehört auch eine Vorrichtung zum Erzeugen elektrischer Energie 11c;22. Sie 11c;22 führ zwei Aufgaben aus. Die erste Aufgabe besteht darin, der von der Resonanz verursachten Zunahme der Schwingungsweite entgegenzuwirken, um den Wert der Schwingungsweite in einem Größenbereich zu halten, der geduldet werden kann, was einer Energieabnahme, insbesondere einer Bewegungsenergieabnahme, aus dem aus dem Stab 1 gebildeten schwingenden System entspricht, Mit anderen Wörtern ausgedrückt, dient die Vorrichtung zum Erzeugen elektrischer Energie 11c;22 auch als Vorrichtung zum Beschränken der Schwingungsweite der Schwingungen des Stabes 1. Die zweite Aufgabe der Vorrichtung zum Erzeugen elektrischer Energie 11c;22 besteht darin, die Bewegungsenergie auszunutzen, die sie aus dem aus dem Stab 1 gebildeten schwingenden System abgenommen hat, um elektrische Energie zu erzeugen. Zu diesem Zweck ist die Vorrichtung zum Erzeugen elektrischer Energie 11c;22 mit den Antriebsmitteln 11b;11b' verbunden, damit sie von der zyklischen Antriebsbewegung angetrieben wird, die letztere 11b;11b' ausführen. Die Vorrichtung 11c;22 besteht aus einem Wechselstromgenerator 11c im Fall einer ersten Ausführungsform, auf die sich die Fig. 1-4 beziehen, während sie im Fall einer zweiten Ausführungsform, auf die sich die Fig. 5-10 beziehen, aus einem Lineargenerator 22 besteht.

Im Fall der ersten Ausführungsform bestehen die Antriebsmittel 11b aus einer mit dem Rotor des Wechselstromgenerators 11c verbundenen Antriebswelle und die zyklische Antriebsbewegung ist eine Drehbewegung, die in den Fig, 1-4 mit einem krummen Pfeil dargestellt ist. Der Rotor des Wechselstromgenerators 11c dreht sich, infolge dieser Drehbewegung, um sich selbst innerhalb des Ständers des Wechselstromgenerators 11c und das erzeugt, in bekannter Weise, elektrische Energie.

Im Fall der zweiten Ausführungsform hingegen, bestehen die Antriebsmittel 11b' aus dem Läufer des Lineargenerators 22 und in diesem Fall stimmt die zyklische Antriebsbewegung mit der oben genannten Hin- und Hertranslationsbewegung überein. Obwohl die Lineargeneratoren bekannt sind, hat man es für zweckdienlich erachtet ihre Hauptmerkmale in den Fig. 9 und 10 darzustellen, um das Verständnis der vorliegenden Beschreibung zu erleichtern.

Der Lineargenerator 22 umfasst einer Hülle 22a, die, wie man in Fig. 9 dargestellt hat, mit zwei Öffnungen versehen ist, um den Durchgang des Läufers 11b' zu ermöglichen. Wie bereits erklärt wurde, stimmt der Läufer 11b', der aus einer Anzahl von aneinander wie in Fig. 9 angeordneten Dauermagneten N (Nord) und S (Süd) besteht, mit den Antriebsmitteln 11b' überein, sodass er durch ein Kugelgelenk mit der zweiten Stange 11a' verbunden ist, man siehe die Fig. 5-10, und eine Hin- und Hertranslationsbewegung ausführt. Der Läufer geht also zyklisch in das rohrförmige Gehäuse 22b aus Metall hinein und aus diesem heraus, wie man in Fig. 9 mit einem Doppelpfeil dargestellt hat, wobei um das rohrförmige Gehäuse herum die Wicklungen 22c angeordnet sind. Die Bewegung des Läufers 11b' innerhalb des rohrförmigen Gehäuses 22b erzeugt aufgrund von bekannten elektrischen Phänomenen einen elektrischen Strom in den Wicklungen 22c, wobei die Richtungen des elektrischen Stromes mittels der üblichen Symbolik angegeben wurden und zwar mittels eines Punktes und eines x.

Die Anlage umfass schließlich auch eine Messvorrichtung 12 der Schwingungsweite und der Frequenz der Schwingungen des Stabes 1, damit man den Schwingungszustand überwachen kann. Diese Messvorrichtung 12 überträgt die Messdaten an die Steuerschalttafel 10, damit man das Phänomen der Resonanz überwachen kann und rechtzeitig all die Steuermaßnahmen ergreifen kann, die notwendig sind, um, im Laufe der Zeit die Resonanz aktiv beizubehalten.

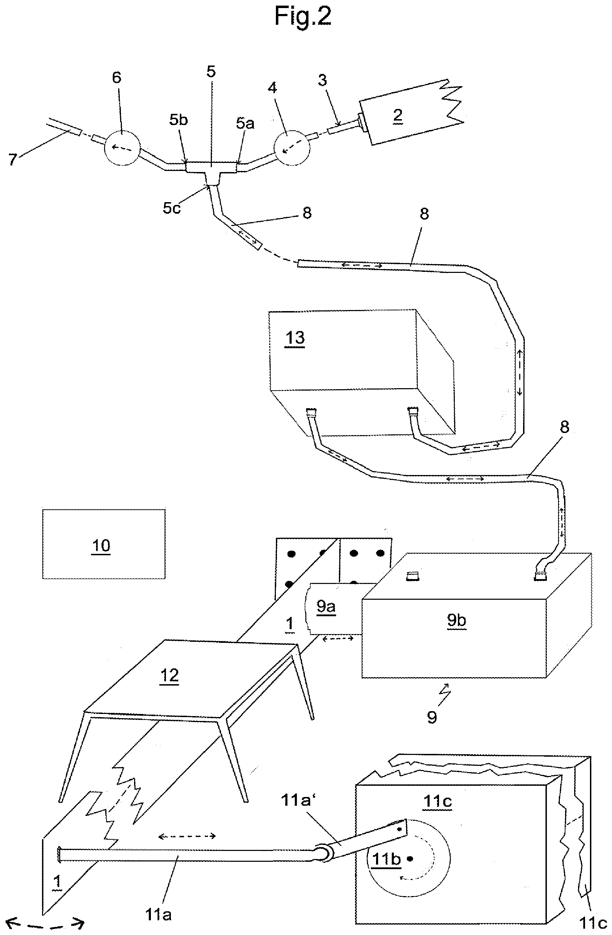

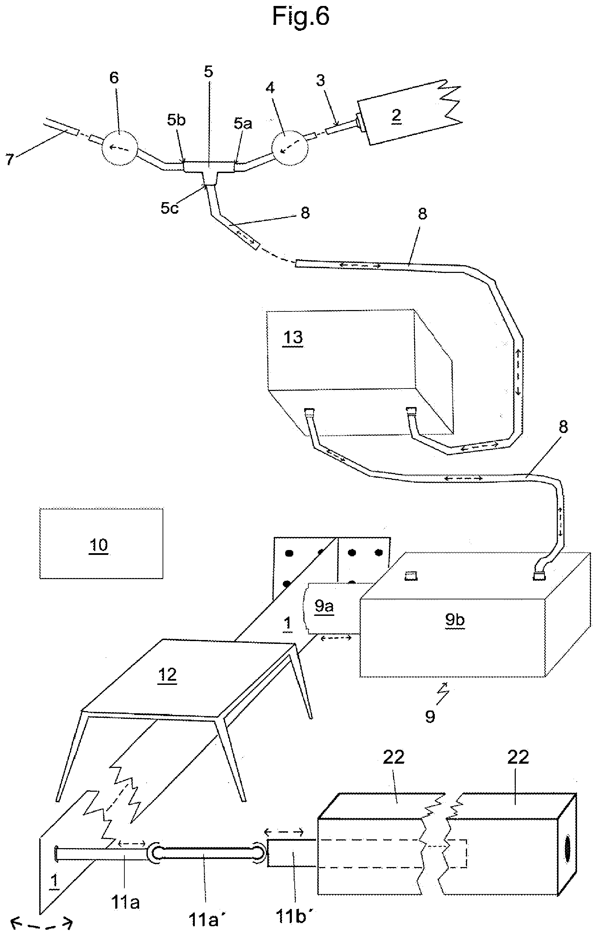

In einem zweiten Ausführungsbeispiel der Anlage, das bezugnehmend auf die erste Ausführungsform in Fig. 2 und bezugnehmend auf die zweite Ausführungsform in Fig. 6 dargestellt ist, ist, als weiterer Bestandteil der Anlage, eine den Druck des unter Druck stehenden Fluids erhöhende Druckerhöhungsvorrichtung 13 vorgesehen, die 13 derart an die Anschlussleitung 8 angeschlossen ist, dass sie von dem in der Anschlussleitung 8 fließenden und unter Druck stehenden Fluid durchströmt wird. Eine solche Druckerhöhungsvorrichtung 13 kann insbesondere nützlich sein, wenn das unter Druck stehende Fluid ein Gas, z.B. Druckluft, ist, wobei in einem solchen Fall die Druckerhöhungsvorrichtung 13 ein Kompressor sein kann, oder wenn die Quelle 2 des unter Druck stehenden Fluids sehr weit entfernt ist und daher notwendig wird etwaige Verminderungen des Druckwertes auszugleichen. Eine solche Druckerhöhungsvorrichtung 13 ist nützlich auch wenn man stromab von ihr 13 den druckwert erhöhen will.

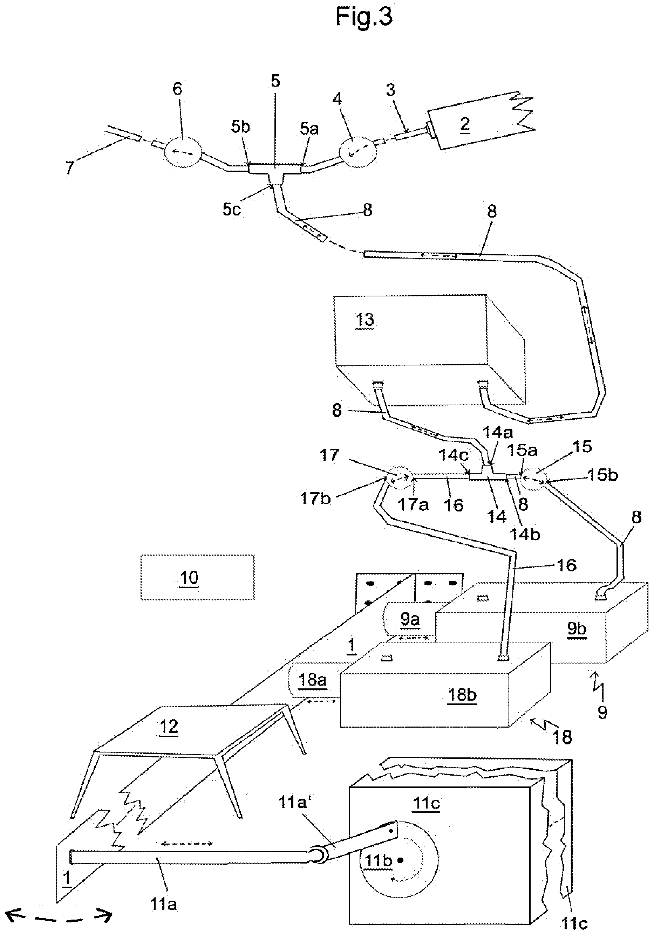

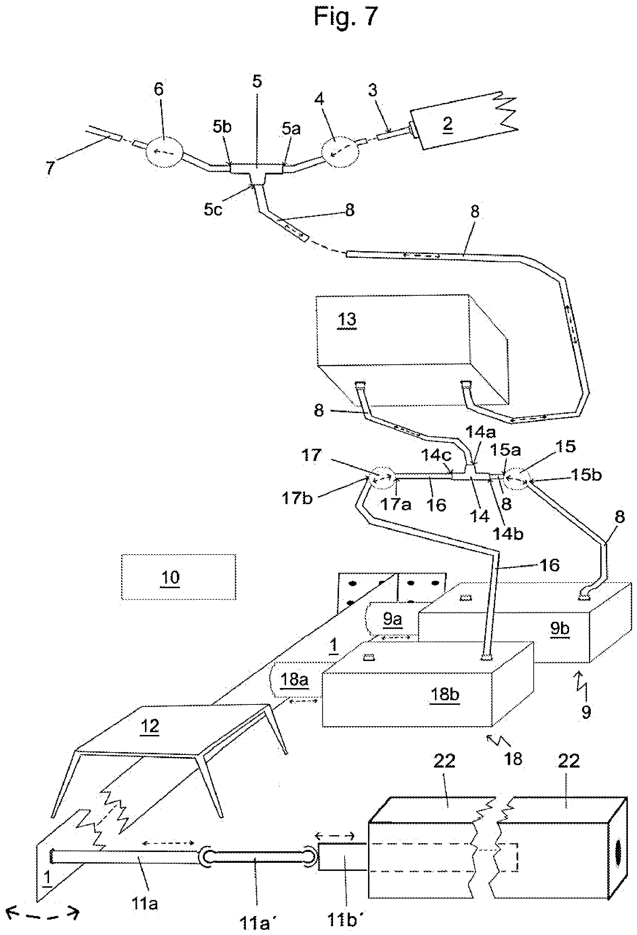

In einem dritten Ausführungsbeispiel, auf das sich hinsichtlich der ersten Ausführungsform die Fig. 3 und hinsichtlich der zweiten Ausführungsform die Fig. 7 bezieht, ist vorgesehen, dass die Anlage auch ein weiteres Dreiwegeanschlussstück 14, ein erstes 15 und ein zweites Sperrelektroventil 17, eine weitere Anschlussleitung 16 und einen weiteren Arbeitszylinder 18 umfasst.

Wie man in Fig. 3 bzw. in Fig. 7 sehen kann, weist das weitere Dreiwegeanschlussstück 14 drei Anschlussöffnungen 14a,14b,14c auf, von denen zwei 14a,14b an die Anschlussleitung 8 angeschlossen sind. Im Einklang mit Fig. 3 sind auch die zwei Durchflussöffnungen 15a,15b der ersten Sperrelektroventils 15 an die Anschlussleitung 8 angeschlossen, während die zwei Durchflussöffnungen 17a,17b des zweiten Sperrelektroventils 17 an die weitere Anschlussleitung 16 angeschlossen sind. In der Praxis ist das erste Sperrelektroventil 15 in der Anschlussleitung 8 angeordnet, während das zweite Sperrelektroventil 17 in der weiteren Anschlussleitung 16 angeordnet ist. Letztere 16 ist ferner an einem ihrer Enden an die Anschlussöffnung 14c des weiteren Dreiwegeanschlussstückes 14 und an dem anderen ihrer Enden an den weiteren Arbeitszylinder 18 angeschlossen.

Der Schaft 18a des weiteren Arbeitszylinders 18 stößt bei seinem Ausfahren aus dem Gehäuse 18b des Arbeitszylinders 18 gegen den Stab 1.

Das erste 15 und das zweite Sperrelektroventil 17 können mittels der Steuerschalttafel 10 von ihrer einen ersten Arbeitsstellung, in der das erste Sperrelektroventil 15 offen und das zweite Sperrelektroventil 17 gleichzeitig geschlossen ist, in ihre eine zweite Arbeitsstellung, in der das erste Sperrelektroventil 15 geschlossen und das zweite Sperrelektroventil 17 gleichzeitig offen ist, und umgekehrt, von ihrer besagten zweiten Arbeitsstellung in ihre besagte erste Arbeitsstellung, umgeschaltet werden.

Die Rolle der beiden Sperrelektroventile 15,17 ist anders als die Rolle des Ventilpaares das aus dem Eintrittselektroventil 4 und dem Ablaufelektroventil 6 gebildet ist. Die Rolle der beiden Sperrelektroventile 15, 17 besteht nämlich darin, das Dreiwegeanschlussstück 5 wahlweise mit dem Arbeitszylinder 9 (erste Arbeitsstellung der beiden Sperrelektroventile 15,17) oder alternativ dazu mit den weiteren Arbeitszylinder 18 (zweite Arbeitsstellung Der beiden Sperrelektroventile 15,17) zu verbinden.

Auch die Stöße des Schaftes 18a gegen den Stab 1 finden, wie jene des Schaftes 9a des Arbeitszylinders 9, mit einer der Eigenfrequenz des Stabes 1 gleichen Frequenz statt, weil auch die Periodizität dieser Stöße von dem Ventilpaar gesteuert ist, das aus dem Eintrittselektroventil 4 und dem Ablaufelektroventil 6 gebildet ist.

Die beiden Sperrelektroventile 15,17 haben nämlich nur die Aufgabe wahlweise die zwei alternativen Wege herzustellen, die das Dreiwegeanschlussstück 5 mit dem Arbeitszylinder 9 oder mit dem weiteren Arbeitszylinder 18 verbinden.

Der weitere Arbeitszylinder 18 ist derart angeordnet, dass der Abstand vom eingespannten Ende des Stabes 1 den die Stelle aufweist, an der der Stab 1 vom Schaft 18a angestoßen wird, größer als der entsprechende Abstand ist, den die Stelle hingegen aufweist, an der der Stab 1 vom Schaft 9a des Arbeitszylinders 9 angestoßen wird. Wie man zuvor erläutert hat, bewirkt der größere Abstand einen größeren Hub der Ausfahrbewegung des Schaftes 18a, aber dieser größere Hub ermöglicht es in kürzerer Zeit die Resonanz zu erreichen.

Wenn man die beiden Sperrelektroventile 15,17 in ihre zweite Arbeitsstellung umschaltet, fließt das unter Druck stehende und aus der Quelle 2 stammende Fluid zum Arbeitszylinder 18 und man kann daher den weiteren Arbeitszylinder 18 dazu benutzten das Verfahren zu starten, damit der Stab 1 zu schwingen anfängt. Danach, wenn die Schwingungen eine gewünschte Schwingungsweite aufweisen, wird der weitere Arbeitszylinder 18 stillgelegt, indem die beiden Sperrelektroventile 15,17 von ihrer zweiten Arbeitsstellung in ihre erste Arbeitsstellung umgeschaltet werden, und man setzt anstelle des weiteren Arbeitszylinders 18 den Arbeitszylinder 9 in Betrieb. Da der Hub der Stoßbewegung des Schaftes 9a des Arbeitszylinders 9 kleiner als jener des Schaftes 18a des weiteren Arbeitszylinders 18 ist, kann man mit einem kleineren Energieverbrauch die Resonanz erreichen und beibehalten.

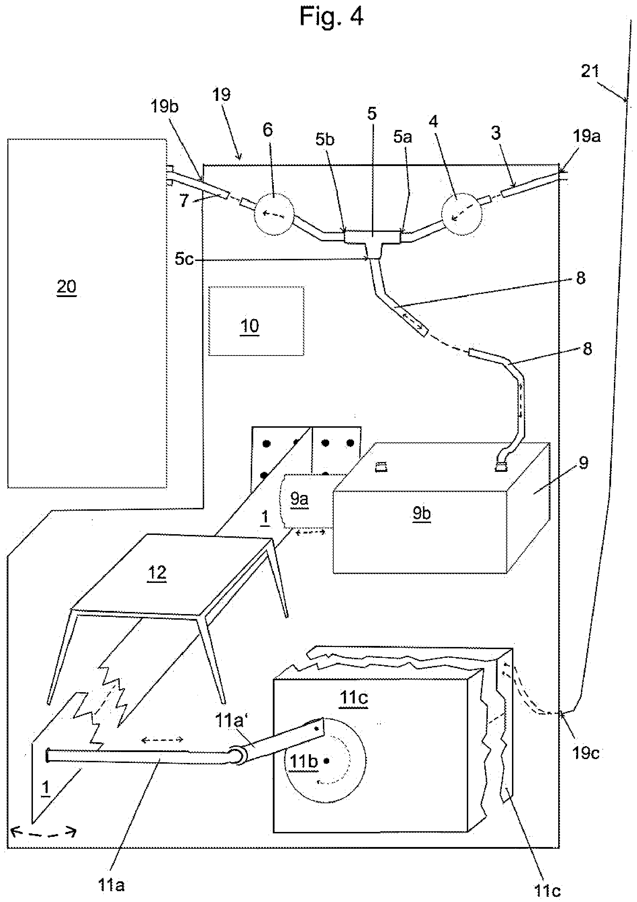

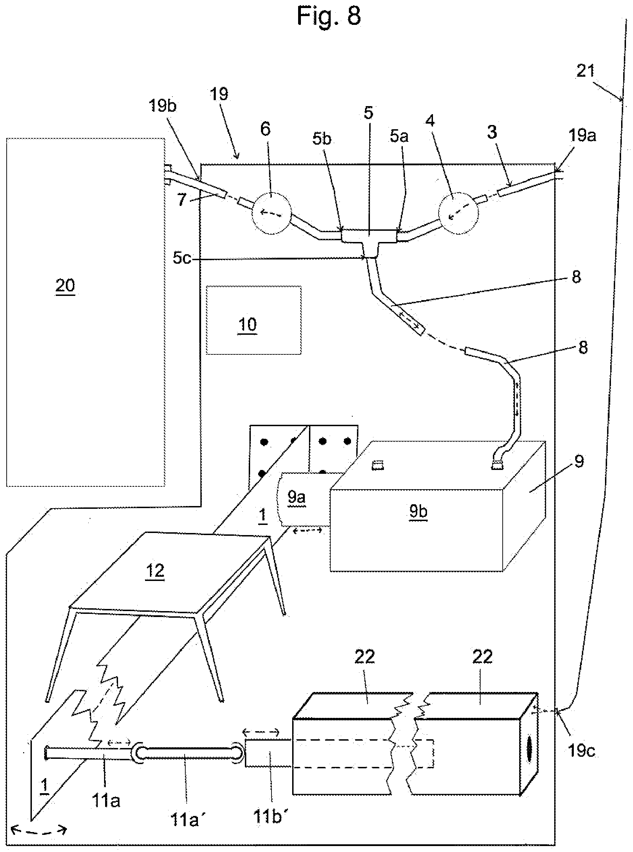

Bezugnehmend auf die erste bzw. zweite Ausführungsform bezieht sich schließlich die Fig. 4 bzw. die Fig. 8 auf ein viertes Ausführungsbeispiel der erfindungsgemäßen Anlage, bei dem die Anlage auch einen abgedichteten Behälter 19, ein Gefäß 20 und ein elektrisches Kabel 21 umfasst. Der abgedichtete Behälter 19 ist geeignet einem im Vergleich zum Luftdruck höheren Druck zu widerstehen und ist mit einer Eintrittsöffnung 19a, durch welche sich die Zulaufleitung 3 hindurch erstreckt, und einer Ablauföffnung 19b, durch welche sich die Ablaufleitung 7 hindurch erstreckt, versehen. Bezugnehmend auf das Gefäß 20 ist dieses an die Ablaufleitung 7 angeschlossen, während das elektrische Kabel 21 an den Wechselstromgenerator 11c bzw. an den Lineargenerator 22 angeschlossen.

Der Behälter 19 weist eine Durchgangsöffnung 19c auf, durch welche sich das elektrische Kabel 21 hindurch erstreckt, mittels welches 21 die vom Wechselstromgenerator 11c bzw. vom Lineargenerator 22 erzeugte elektrische Energie übertragen wird.

Es ist ferner vorgesehen, dass alle Bestandteile der Anlage, mit Ausnahme der Zulaufleitung 3, der Ablaufleitung 7, des Gefäßes 20 und des elektrischen Kabels 21 vollständig innerhalb des Behälters 19 angeordnet sind. Auf diese Weise ist die Anlage gemäß Fig. 4 bzw. Fig. 8 geeignet ins Wasser eingetaucht zu werden, z.B. in einen See oder ins Meer, sodass der See oder das Meer als Quelle 2 des unter Druck stehenden Fluids dienen und es ist sein unter Druck stehende Wasser dasjenige Fluid das durch die Zulaufleitung 3 hindurch fließt.

## Patentansprüche

1. Anlage zum Erzeugen elektrischer Energie, umfassend:
. einen an seinem einem Ende eingespannten Stab (1);
. eine Quelle (2) eines unter Druck stehenden Fluids;
. eine Zulaufleitung (3), die an die Quelle (2) eines unter Druck stehenden Fluids angeschlossen ist;
. ein Eintrittselektroventil (4), dessen Eintrittsöffnung an die Zulaufleitung (3) angeschlossen ist;
. ein Dreiwegeanschlussstück (5), das eine an die Ablauföffnung des Eintrittselektroventils (4) angeschlossene Eintrittsöffnung (5a), eine Ablauföffnung (5b) und eine Anschlussöffnung (5c) besitzt;
. ein Ablaufelektroventil (6), dessen Eintrittsöffnung an die Ablauföffnung (5b) des Dreiwegeanschlussstückes (5) angeschlossen ist;
. eine Ablaufleitung (7), die an die Ablauföffnung des Ablaufelektroventils (6) angeschlossen ist;
. eine Anschlussleitung (8), die an die Anschlussöffnung (5c) des Dreiwegeanschlussstückes (5) angeschlossen ist;
. zumindest einen an die Anschlussleitung (8) angeschlossenen Arbeitszylinder (9), wobei der Schaft (9) des Arbeitszylinders (9) bei seinem Ausfahren aus dem Gehäuse (9b) des Arbeitszylinders (9) gegen den Stab 1 stößt;
. eine Steuerschalttafel (10);
. eine erste Stange (11a), die mit ihrem einen ersten Ende mit dem Stab (1) verbunden ist, und eine zweite Stange (11a'), die mit ihrem einen ersten Ende gelenkig mit dem zweiten Ende der ersten Stange (11a) verbunden ist, wobei die zwei Stangen (11a, 11a') als Umwandlungs- und Übertragungsmittel wirken, die die vom Stab (1) ausgeführte Schwingungsbewegung in eine Hin- und Hertranslationsbewegung umwandeln und danach diese Hin- und Hertranslationsbewegung weiterübertragen;
. Antriebsmittel (11b;11b'), die gelenkig mit dem zweiten Ende der zweiten Stange (11a') verbunden sind, um von dieser (11a) besagte Hin- und Hertranslationsbewegung zu erhalten und dadurch eine zyklische Antriebsbewegung auszuführen, und
. eine Vorrichtung zum Erzeugen elektrischer Energie (11c;22), die mit den Antriebsmitteln (11b;11b') verbunden ist, damit sie von der zyklischen Antriebsbewegung angetrieben wird, die die Antriebsmittel (11b;11b') ausführen, wobei während des Betriebes der Anlage das Eintrittselektroventil (4) und das Ablaufelektroventil (6) mit einer der Eigenfrequenz des Stabes (1) gleichen Frequenz von ihrer einen ersten Arbeitsstellung, in der das Eintrittselektroventil (4) offen und das Ablaufelektroventil (6) geschlossen ist, in ihre eine zweite Arbeitsstellung, in der das Eintrittselektroventil (4) geschlossen und das Ablaufelektroventil (6) offen ist, und umgekehrt, von ihrer besagten zweiten Arbeitsstellung in ihre besagte erste Arbeitsstellung, fortlaufend umgeschaltet werden.

2. Anlage nach Anspruch 1, **dadurch gekennzeichnet, dass** der Arbeitszylinder (9) derart angeordnet ist, dass die Stelle, an der der Stab (1) vom Schaft (9a) angestoßen wird, sich dem eingespannten Ende des Stabes (1) so nahe wie möglich befindet.

3. Anlage nach Anspruch 2, **dadurch gekennzeichnet, dass** der Arbeitszylinder (9) ein hydraulischer Arbeitszylinder ist und **dass** das unter Druck stehende Fluid eine unter Druck stehende Flüssigkeit ist.

4. Anlage nach Anspruch 3, **dadurch gekennzeichnet, dass** die unter Druck stehende Flüssigkeit unter Druck stehendes Wasser ist und **dass** die Quelle (2) des unter Druck stehenden Wassers eine Leitung von fließendem Wasser ist.

5. Anlage nach einem der vorhergehenden Ansprüche, **dadurch gekennzeichnet, dass** sie eine Messvorrichtung (12) der Schwingungsweite und der Frequenz der Schwingungen des Stabes (1) umfasst, die an die Steuerschalttafel (10) angeschlossen ist, an der sie die Messdaten überträgt.

6. Anlage nach einem der vorhergehenden Ansprüche, **dadurch gekennzeichnet, dass** sie eine den Druck des unter Druck stehenden Fluids erhöhende Druckerhöhungsvorrichtung (13) umfasst, die (13) derart an die Anschlussleitung (8) angeschlossen ist, dass sie von dem in der Anschlussleitung (8) fließenden und unter Druck stehenden Fluid durchströmt wird.

7. Anlage nach einem der vorhergehenden Ansprüche, **dadurch gekennzeichnet, dass** sie ferner umfasst:
. ein weiteres Dreiwegeanschlussstück (14), wobei zwei (14a,14b) seiner drei Anschlussöffnungen (14a,14b,14c) an die Anschlussleitung (8) angeschlossen sind;
. ein erstes Sperrelektroventil (15), dessen zwei Durchflussöffnungen (15a,15b) an die Anschlussleitung (8) angeschlossen sind;
. eine weitere Anschlussleitung (16), die an die restliche (14c) der Anschlussöffnungen (14a,14b,14c) des weiteren Dreiwegeanschlussstückes (14) angeschlossen ist;
. ein zweites Sperrelektroventil (17), dessen zwei Durchflussöffnungen (17a,17b) an die weitere Anschlussleitung (16) angeschlossen sind, und
. einen weiteren an die weitere Anschlussleitung (16) angeschlossenen Arbeitszylinder (18), wobei der Schaft (18a) des weiteren Arbeitszylinders (18) bei seinem Ausfahren aus dem Gehäuse (18b) des Arbeitszylinders (18) mit einer der Eigenfrequenz des Stabes (1) gleichen Frequenz gegen den Stab (1) stößt;
wobei das erste (15) und das zweite Sperrelektroventil (17) von ihrer einen ersten Arbeitsstellung, in der das erste Sperrelektroventil (15) offen und das zweite Sperrelektroventil (17) geschlossen ist, in ihre eine zweite Arbeitsstellung, in der das erste Sperrelektroventil (15) geschlossen und das zweite Sperrelektroventil (17) offen ist, und umgekehrt, von ihrer besagten zweiten Arbeitsstellung in ihre besagte erste Arbeitsstellung, umgeschaltet werden können.

8. Anlage nach Anspruch 7, **dadurch gekennzeichnet, dass** der weitere Arbeitszylinder (18) derart angeordnet ist, dass der Abstand vom eingespannten Ende des Stabes (1) den die Stelle aufweist, an der der Stab (1) vom Schaft (18a) angestoßen wird, größer als der Abstand ist, den die Stelle aufweist, an der der Stab (1) vom Schaft (9a) des Arbeitszylinders (9) angestoßen wird.

9. Anlage nach einem der vorhergehenden Ansprüche, **dadurch gekennzeichnet, dass** sie ferner umfasst:
. einen abgedichteten Behälter (19), der geeignet ist einem im Vergleich zum Luftdruck höheren Druck zu widerstehen und mit einer Eintrittsöffnung (19a), durch welche sich die Zulaufleitung (3) hindurch erstreckt, und einer Ablauföffnung (19b), durch welche sich die Ablaufleitung (7) hindurch erstreckt, versehen ist:
. ein an die Ablaufleitung (7) angeschlossenes Gefäß (20) und
. ein elektrisches Kabel (21), das an die Vorrichtung zum Erzeugen elektrischer Energie (11c;22) angeschlossen ist und mittels welches (21) die von der Vorrichtung zum Erzeugen elektrischer Energie (11c;22) erzeugte elektrische Energie übertragen wird, wobei der Behälter (19) eine Durchgangsöffnung (19c) aufweist, durch welche sich das elektrische Kabel (21) hindurch erstreckt und alle Bestandteile der Anlage, mit Ausnahme der Zulaufleitung (3), der Ablaufleitung (7), des Gefäßes (20) und des elektrischen Kabels (21) vollständig innerhalb des Behälters (19) angeordnet sind.

10. Anlage nach Anspruch 9, **dadurch gekennzeichnet, dass** die Vorrichtung zum Erzeugen elektrischer Energie ein Wechselstromgenerator (11c) ist und **dass** die Antriebsmittel (11b) aus einer mit dem Rotor des Wechselstromgenerators (11c) verbundenen Antriebswelle bestehen, wobei besagte zyklische Antriebsbewegung eine Drehbewegung ist,

11. Anlage nach Anspruch 9, **dadurch gekennzeichnet, dass** die Vorrichtung zum Erzeugen elektrischer Energie ein Lineargenerator (22) ist und **dass** die Antriebsmittel (11b') aus dem Läufer des Lineargenerators (22) bestehen, wobei besagte zyklische Antriebsbewegung aus besagter Hin- und Hertranslationsbewegung besteht.

## Claims

1. System for generating electrical energy, comprising:
. a bar (1) fixed at one of its ends;
. a source (2) of a pressurized fluid;
. a feeding duct (3) connected to the source (2) of a pressurized fluid;
. an inlet solenoid valve (4), whose inlet opening is connected to the feeding duct (3);
. a three-way union (5), having an inlet opening (5a), connected to the outlet opening of the inlet solenoid valve (4), an exhaust opening (5b) and a connection opening (5c);
. an exhaust solenoid valve (6), whose inlet opening is connected to the exhaust opening (5b) of the three-way union (5);
. an exhaust duct (7) connected to the outlet opening of the exhaust solenoid valve (6);
. a connection duct (8) connected to the connection opening (5c) of the three-way union (5);
. at least one operating cylinder (9) connected to the connection duct (8), the stem (9a) of the operating cylinder (9) bumping against the bar (1) upon its exit from the body (9b) of the operating cylinder (9);
. a command and control board (10);
. a first rod (11a), which is connected with its first end to the bar (1), and a second rod (11a'), which is connected with its first end in an articulated manner to the second end of the first rod (11a), the two rods (11a,11a') acting as transformation and transmission means, which transform the oscillation movement performed by the bar (1) into a back-and-forth translation movement and then transmit said back-and-forth translation movement;
. drive means (11b;11b'), which are connected in an articulated manner to the second end of the second rod (11a'), to receive from it (11a') said back-and-forth translation movement and to execute thereby a cyclic drive movement, and
. a device for generating electrical energy (11c;22),which is connected to the drive means (11b;11b') so as to be driven by the cyclic drive movement which the drive means (11b;11b') execute, during the operation of the system the inlet solenoid valve (4) and the exhaust solenoid valve (6) being continuously switched with a frequency equal to the natural frequency of the bar (1) from a first operating state thereof, wherein the inlet solenoid valve (4) is open and the exhaust solenoid valve (6) is closed, to a second operating state thereof, wherein the inlet solenoid valve (4) is closed and the exhaust solenoid valve (6) is open, and vice versa from said second operating state to said first operating state.

2. System according to claim 1, **characterised in that** the operating cylinder (9) is positioned in such a way that the point where the bar (1) is bumped by the stem (9a) is as close as possible to the fixed end of the bar (1).

3. System according to claim 2, **characterised in that** the operating cylinder (9) is a hydraulic operating cylinder and **in that** the pressurized fluid is a pressurized liquid.

4. System according to claim 3, **characterised in that** the pressurized liquid is pressurized water and **in that** the source (2) of pressurized water is a pipe of running water.

5. System according to one of the previous claims, **characterised in that** it comprises a measuring device (12) for measuring the amplitude and frequency of the oscillations of the bar (1), which is connected to the command and control board (10) to which it transmits the measurement data.

6. System according to one of the previous claims, **characterised in that** it comprises a pressure amplification device (13) of the pressurized fluid, which (13) is connected to the connection duct (8) in such a way that it is crossed by the pressurized fluid flowing in it (8).

7. System according to one of the previous claims, **characterised in that** it also comprises:
. a further three-way union (14), two (14a,14b) of its three connection openings (14a,14b,14c) being connected to the connection duct (8);
. a first shutoff solenoid valve (15), whose two passage openings (15a,15b) are connected to the connection duct (8);
. a further connection duct (16), which is connected to the remaining one (14c) of the connection openings (14a,14b,14c) of the further three-way union (14);
. a second shutoff solenoid valve (17), whose two passage openings (17a,17b) are connected to the further connection duct (16) and
. a further operating cylinder (18) connected to the further connection duct (16), the stem (18a) of the further operating cylinder (18) bumping, upon its exit from the body (18b) of the operating cylinder (18), with a frequency equal to the natural frequency of the bar (1) against the bar (1),
the first (15) and the second shutoff solenoid valve (17) being able to be switched from a first operating state thereof, in which the first shutoff solenoid valve (15) is open and the second shutoff solenoid valve (17) is closed, into a second operating state thereof, in which the first shutoff solenoid valve (15) is closed and the second shutoff solenoid valve (17) is open, and vice versa from said second operating state thereof into said first operating state thereof.

8. System according to claim 7, **characterised in that** the further operating cylinder (18) is positioned in such a way that the distance from the fixed end of the bar (1) of the point in which the bar (1) is bumped by the stem (18a) is greater than the distance of the point in which the bar (1) is bumped by the stem (9a) of the operating cylinder (9).

9. System according to one of the previous claims, **characterised in that** it also comprises:
. a watertight receptacle (19), suitable to withstand external pressures higher than atmospheric pressure and provided with an inlet opening (19a), through which the feeding duct (3) extends, and with an exhaust opening (19b), through which the exhaust duct (7) extends;
. a tank (20) connected to the exhaust duct (7) and
. an electrical cable (21), which is connected to the device for generating electrical energy (11c,22) and by means of which (21) the electrical energy produced by the device for generating electrical energy (11c,22) is transmitted, the receptacle (19) having a passage opening (19c), through which extends the electrical cable (21), and all the components of the system, except for the feeding duct (3), the exhaust duct (7), the tank (20) and the electrical cable (21) being arranged fully inside the receptacle (19).

10. System according to claim 9, **characterised in that** the device for generating electrical energy is an alternator (11c) and **in that** the drive means (11b) consist of a drive shaft connected to the rotor of the alternator (11c), said cyclic drive movement being a rotational movement.

11. System according to claim 9, **characterised in that** the device for generating electrical energy is a linear generator (22) and **in that** the drive means (11b') consist of the slider of the linear generator (22), said cyclic drive movement coinciding with said back-and-forth translation movement.

## Revendications

1. Système de génération d'énergie électrique, comprenant :
. une barre (1) encastrée à l'une de ses extrémités;
. une source (2) d'un fluide sous pression;
. un conduit d'alimentation (3) branché à la source (2) du fluide sous pression;
. une électrovanne d'entrée (4), dont l'ouverture d'entrée est branchée au conduit d'alimentation (3);
. un raccord (5) à trois voies, ayant une ouverture d'entrée (5a), branchée à l'ouverture de sortie de l'électrovanne d'entrée (4), une ouverture de décharge (5b) et une ouverture de branchement (5c);
. une électrovanne de décharge (6), dont l'ouverture d'entrée est branchée à l'ouverture de décharge (5b) du raccord (5) à trois voies;
. un conduit de décharge (7) branché à l'ouverture de sortie de l'électrovanne de décharge (6);
. un conduit de branchement (8) branché à l'ouverture de branchement (5c) du raccord (5) à trois voies;
. au moins un cylindre opérateur (9) branché au conduit de branchement (8), le piston (9a) du cylindre opérateur (9) heurtant contre la barre (1) lors de sa sortie du corps (9b) du cylindre opérateur (9);
. un panneau de commande et de contrôle (10);
. une première tige (11a), qui est connectée par une première extrémité à la barre (1), et une deuxième tige (11a'), qui est connectée par une première extrémité de manière articulée à la deuxième extrémité de la première tige (11a), les deux tiges (11a,11a') agissant comme des moyens de transformation et de transmission, qui transforment le mouvement de oscillation réalisé par la barre (1) en un mouvement de translation de va-et-vient et transmettent ensuite ledit mouvement de translation de va-et-vient;
. des moyens d'actionnement (11b;11b'), qui sont connectés de manière articulée à la deuxième extrémité de la deuxième tige (11a'), pour recevoir par celle-ci (11a') ledit mouvement de translation de va-et-vient et réaliser par effet de cela un mouvement cyclique d'actionnement, et
. un dispositif pour la génération d'énergie électrique (11c;22), qui est connecté aux moyens d'actionnement (11b;11b') de manière à être actionné par le mouvement cyclique d'actionnement que ces derniers (11b;11b') réalisent, pendant le fonctionnement du système l'électrovanne d'entrée (4) et l'électrovanne de sortie (6) étant continuellement commutées avec une fréquence égale à la fréquence naturelle de la barre (1) d'une leur première situation opérationnelle, où l'électrovanne d'entrée (4) est ouverte et l'électrovanne de sortie (6) est fermée, à une leur deuxième situation opérationnelle, où l'électrovanne d'entrée (4) est fermée et l'électrovanne de sortie (6) est ouverte, et vice-versa de leur dite deuxième situation opérationnelle à leur dite première situation opérationnelle.

2. Système selon la revendication 1, **caractérisée en ce que** le cylindre opérateur (9) est placé de telle manière que le point où la barre (1) est heurtée par le piston (9a) se trouve le plus proche possible de l'extrémité encastrée de la barre (1).

3. Système selon la revendication 2, **caractérisée en ce que** le cylindre opérateur (9) est un cylindre opérateur hydraulique et que le fluide sous pression est un liquide sous pression.

4. Système selon la revendication 3, **caractérisée en ce que** le liquide sous pression est de l'eau sous pression et que la source (2) de l'eau sous pression est une tubulure d'eau courante.

5. Système selon une des revendications précédentes, **caractérisée en ce qu'**elle comprend un dispositif de mesure (12) de l'amplitude et de la fréquence des oscillations de la barre (1), connecté au panneau de commande et de contrôle (10), auquel il transmet les données de mesure.

6. Système selon une des revendications précédentes, **caractérisée en ce qu'**elle comprend un dispositif d'amplification de la pression (13) du fluide sous pression, lequel (13) est branché au conduit de branchement (8) de telle manière qu'il est traversé par le fluide sous pression qui coule dedans (8).

7. Système selon une des revendications précédentes, **caractérisée en ce qu'**elle comprend en outre :
. un raccord supplémentaire (14) à trois voies, deux (14a,14b) de ses trois ouvertures de branchement (14a,14b,14c) étant branchées au conduit de branchement (8);
. une première électrovanne de barrage (15), dont le deux ouvertures de passage (15a, 15b) sont branchées au conduit de branchement (8);
. un conduit de branchement supplémentaire (16), qui est branché à la restante (14c) des ouvertures de branchement (14a,14b,14c) du raccord supplémentaire (14) à trois voies;
. une deuxième électrovanne de barrage (17), dont le deux ouvertures de passage (17a,17b) sont branchées au conduit de branchement supplémentaire (16) et
. un cylindre opérateur supplémentaire (18) branché au conduit de raccordement supplémentaire (16), le piston(18a) du cylindre opérateur supplémentaire (18) heurtant, lors de sa sortie du corps (18b) du cylindre opérateur (18), avec une fréquence égale à la fréquence naturelle de la barre (1) contre la barre (1),
la première (15) et la deuxième électrovanne de barrage (17) pouvant être commutées d'une leur première situation opérationnelle, où la première électrovanne de barrage (15) est ouverte et la deuxième électrovanne de barrage (17) est fermée, à une leur deuxième situation opérationnelle, où la première électrovanne de barrage (15) est fermée et la deuxième électrovanne de barrage (17) est ouverte, et vice-versa de leur dite deuxième situation opérationnelle à leur dite première situation opérationnelle.

8. Système selon la revendication 7, **caractérisée en ce que** le cylindre opérateur supplémentaire (18) est placé de telle manière que la distance de l'extrémité encastrée de la barre (1) qui présente le point où la barre (1) est heurtée par le piston (18a) est supérieure à la distance qui présente le point où la barre (1) est heurtée par le piston (9a) du cylindre opérateur (9).

9. Système selon une des revendications précédentes, **caractérisée en ce qu'**elle comprend en outre :
. un récipient étanche (19), apte à résister à des pressions externes qui sont supérieures à la pression atmosphérique et pourvu d'une ouverture d'entrée (19a), à travers laquelle s'étend le conduit d'alimentation (3), et d'une ouverture de décharge (19b), à travers laquelle s'étend le conduit de décharge (7);
. un réservoir (20) branché au conduit de décharge (7) et
. un câble électrique (21), qui est branché au dispositif pour la génération d'énergie électrique (11c;22) et par lequel (21) l'énergie électrique produite par le dispositif pour la génération d'énergie électrique (11;22) est transmise, le récipient (19) ayant une ouverture de passage (19c) par laquelle s'étend le câble électrique (21) et tous les composants du système, à l'exception du conduit d'alimentation (3), du conduit de décharge (7), du réservoir (20) et du câble électrique (21) étant complètement disposés à l'intérieur du récipient (19).

10. Système selon la revendication 9, **caractérisée en ce que** le dispositif pour la génération d'énergie électrique est un alternateur (11c) et **que** les moyens d'actionnement (11b) sont constitués par un arbre moteur connecté au rotor de l'alternateur (11c), ledit mouvement cyclique d'actionnement étant un mouvement de rotation.

11. Système selon la revendication 9, **caractérisée en ce que** le dispositif pour la génération d'énergie électrique est un générateur linéaire (22) et **que** les moyens d'actionnement (11b') sont constitués par le curseur du générateur linéaire (22), ledit mouvement cyclique d'actionnement coïncidant avec ledit mouvement de translation de va-et-vient.
